**Europäisches Patentamt**

**European Patent Office**

**Office européen des brevets**

(19)

(11) Veröffentlichungsnummer : **0 425 784 B1**

(12)

# EUROPÄISCHE PATENTSCHRIFT

(45) Veröffentlichungstag der Patentschrift :
26.01.94 Patentblatt 94/04

(51) Int. Cl.⁵ : **H01M 2/16**

(21) Anmeldenummer : **90116133.1**

(22) Anmeldetag : **23.08.90**

(54) **Separator für Blei/Schwefelsäure-Akkumulatoren und Verfahren zur Verringerung der Bildung von gefärbten Ablagerungen in einem Blei/Schwefelsäure-Akkumulator.**

Die Akte enthält technische Angaben, die nach dem Eingang der Anmeldung eingereicht wurden und die nicht in dieser Patentschrift enthalten sind.

(30) Priorität : **29.08.89 DE 3928468**

(43) Veröffentlichungstag der Anmeldung :
**08.05.91 Patentblatt 91/19**

(45) Bekanntmachung des Hinweises auf die
Patenterteilung :
**26.01.94 Patentblatt 94/04**

(84) Benannte Vertragsstaaten :
**DE ES FR GB IT**

(56) Entgegenhaltungen :
**EP-A- 0 265 136**
**GB-A- 2 027 637**

(73) Patentinhaber : **Grace GmbH**
**Erlengang 31**
**D-22844 Norderstedt (DE)**

(72) Erfinder : **Bünsch, Hellmut, Dr.**
**Saseler Mühlenweg 47 a**
**D-2000 Hamburg 65 (DE)**
Erfinder : **Ihmels, Klaus Heinrich, Dr.**
**Meerweinstrasse 13**
**D-2000 Hamburg 60 (DE)**
Erfinder : **Theubert, Frank Otto, Dr.**
**Heinrich-Loennies-Strasse 64**
**D-2000 Norderstedt (DE)**

(74) Vertreter : **UEXKÜLL & STOLBERG**
**Patentanwälte**
**Beselerstrasse 4**
**D-22607 Hamburg (DE)**

Jouve, 18, rue Saint-Denis, 75001 PARIS

EP 0 425 784 B1

## Beschreibung

Blei/Schwefelsäure-Akkumulatoren (im folgenden der Kürze halber Bleiakkumulatoren genannt) enthalten zu einem immer größeren Anteil Separatoren aus gefüllten Polyolefinen. Bei diesen Separatoren handelt es sich um mikroporöse Scheider, deren Zusammensetzung und Herstellung aus dem Stand der Technik bekannt ist (vgl. z.B. DE-PS 1 267 423, DE-PS 1 298 712, DE-AS 1 496 123, DE-OS 35 45 615, DE-PS 35 40 718, DE-PS 36 17 318, DE-OS 30 04 659, GB-A 2,027,637, US-PS 4,024,323 und US-PS 4,237,083).

Im Gegensatz zu Separatoren auf Basis von imprägnierten Cellulosepapieren, PVC oder Phenol-Formaldehyd-Harzen bieten Separatoren aus gefüllten Polyolefinen verschiedene Vorteile. Zum einen kann durch ihr günstiges Eigenschaftsspektrum die Lebensdauer und Leistungsfähigkeit von Bleiakkumulatoren verbessert werden, zum anderen ergeben sich auch Vorteile in der Akkumulatorfertigung. Die hohe Flexibilität der Separatoren aus gefüllten Polyolefinen erlaubt die vollautomatische Umhüllung von Bleiplatten mit anschließendem Verschluß der Seitenkanten, so daß sich die Bleiplatten geschützt in einer an drei Seiten geschlossenen Separatortasche befinden.

Bei Verwendung von Separatoren aus gefüllten Polyolefinen in Bleiakkumulatoren werden jedoch auch unerwünschte Vorgänge beobachtet.

Durch Wechselwirkung von angelegtem Strom, Bestandteilen der Bleiplatten, der Batteriesäure und Bestandteilen der gefüllten Polyolefinseparatoren entstehen im Bleiakkumulator Substanzen bzw. Substanzgemische, die aufgrund ihres geringen spezifischen Gewichts an die Oberfläche der Batteriesäure steigen und dort meist gefärbte, oft auch klebrige Ablagerungen bilden, die sich bevorzugt an Kontaktflächen zwischen Akkumulatorsäure und Akkumulatorbestandteilen, z.B. am Gehäuse ablagern. Beim Ladeprozeß freigesetzte Gase steigen in Blasen in der Säure nach oben, platzen an der Oberfläche der Säure und schleudern dabei Säure und Ablagerungen nach oben, so daß Deckel, Deckelöffnung, eventuell aufgesetzter Deckelverschluß und Außenseite des Akkumulatorgehäuses damit bedeckt werden.

Gehäuse für Bleiakkumulatoren bestehen z.B. aus Polypropylen, Methacrylat oder Polystyrol und sind damit transparent oder vollkommen durchsichtig. Beim Betrieb der Bleiakkumulatoren entstehende gefärbte Ablagerungen lagern sich an den Innenseiten der Behälter ab und sind daher von außen sichtbar. Da die Ablagerungen selbst nicht transparent sind, lassen sie eine genaue Beurteilung des Säurestands des Bleiakkumulators nicht zu und erschweren damit die regelmäßige Kontrolle und Einstellung des Säurestands. So erhöht sich, wenn nicht genügend Wasser nachgefüllt wird, die Konzentration der Akkumulatorsäure. Gleichzeitig sinkt der Säurespiegel im Akkumulator unter Umständen so weit, daß die Bleiplatten teilweise aus der Säure herausragen und austrocknen.

Bleiakkumulatoren, die z.B. für den Antrieb von Fahrzeugen eingesetzt werden, sind oft mit einem Ventilsystem für automatische Bewässerung ausgestattet. Regelmäßig werden diese Bleiakkumulatoren über das Ventilsystem an einen Wasservorratsbehälter angeschlossen. Das Ventilsystem sorgt bei ordnungsgemäßem Betrieb dafür, daß ein bestimmter Flüssigkeitsstand im Bleiakkumulator aufrechterhalten wird. Enthalten derartige Bleiakkumulatoren jedoch Separatoren aus gefüllten Polyolefinen, so entstehen, wie oben geschildert, Ablagerungen, die das Wassernachfüllsystem funktionsuntüchtig machen können. In der Folge wird kein Wasser nachgefüllt, so daß der Säurespiegel im Akkumulator absinkt.

Manche Bleiakkumulatoren sind mit Gasungsöffnungen aus porösen Materialien ausgestattet, die ein ungehindertes Entweichen der gebildeten Gase ermöglichen, aber Knallgasexplosionen durch Fernhaltung vom Zündfunken verhindern sollen. Sind in derartigen Bleiakkumulatoren oben beschriebene gefüllte Polyolefinseparatoren enthalten, kann es, wie beschrieben, beim Betrieb der Bleiakkumulatoren zur Bildung von Ablagerungen kommen, die die Entgasungsöffnungen verstopfen und damit undurchlässig für Gase machen können.

Angesichts der oben geschilderten Probleme lag der Erfindung die Aufgabe zugrunde, die sich in Bleiakkumulatoren mit Separatoren aus gefüllten Polyolefinen während der Formation und des Betriebs bildenden gefärbten, meist dunklen und häufig klebrigen Ablagerungen mengenmäßig zu verringern.

Zur Lösung dieser Aufgabe wird ein Blei/Schwefelsäure-Akkumulator mit mindestens einem Separator aus gefülltem Polyolefin, vorgeschlagen, der dadurch gekennzeichnet ist, daß der Separator als Weichmacher ein Prozeßöl mit einem $C_A$-Wert von $\leqq 6\%$, einem Schwefelgehalt von $\leqq 2000$ ppm und einem polaren Anteil von $\leqq 1,0\%$ enthält. Gegenstand der Erfindung ist ferner ein Separator aus gefülltem Polyolefin für Blei/Schwefelsäure-Akkumulatoren, der dadurch gekennzeichnet ist, daß er als Weichmacher ein Prozeßöl mit einem $C_A$-Wert von $\leqq 6\%$, einem Schwefelgehalt $\leqq 2000$ ppm und einem polaren Anteil von $\leqq 1,0\%$ enthält.

Schließlich ist Gegenstand der Erfindung ein Verfahren zur Verringerung der Bildung von gefärbten, meist dunklen und häufig klebrigen Ablagerungen in einem Blei/Schwefelsäure-Akkumulator mit mindestens einem Separator aus gefülltem Polyolefin, das dadurch gekennzeichnet ist, daß man in dem Akkumulator Separatoren verwendet, die als Weichmacher ein Prozeßöl mit einem $C_A$-Wert von $\leqq 6\%$, einem Schwefelgehalt von $\leqq 2000$

ppm und einem polaren Anteil von ≦ 1,O% enthalten.

Es wurde überraschend gefunden, daß eine entscheidende Verringerung der oben erwähnten Ablagerungen bei Verwendung von Prozeßölen als Weichmacher für Separatoren aus gefülltem Polyolefin erzielt werden kann, wenn die Öle einen $C_A$-Wert nach DIN 51378 (ohne Schwefelkorrektur) von ≦ 6%, einen nach DIN 51400 bestimmbaren Gesamtschwefelgehalt von ≦ 2000 ppm und einen polaren Anteil nach ASTM D 2007 (polar compounds in Gew.%) von ≦ 1,O% aufweisen.

Die erfindungsgemäß wirksamen Mineralöle zeichnen sich durch gleichzeitige Erfüllung der Bedingungen $C_A$ ≦ 6 %, Gesamtschwefelgehalt ≦ 2000 ppm und polarer Anteil ≦ 1,O% aus. Vom Typ her können diese Öle sowohl relativ naphthenisch, naphthenisch als auch paraffinisch sein, wobei zur Klassifizierung die Viskositäts-Dichte-Konstante dient (Ullmans Encyclopädie der technischen Chemie, Verlag Chemie 1981, 4. Auflage, Band 20, S. 616). Relativ naphthenische Öle mit einer Viskositäts-Dichte-Konstante von 0,820 - 0,849 sind am meisten bevorzugt, während paraffinische Öle am wenigsten bevorzugt sind. Bei letzteren sollte der $C_A$-Wert größer als 0,1%, vorzugsweise größer als 0,5% und insbesondere größer als 1% und der Schwefelgehalt größer als 100 ppm sein. Aromatische Öle erfüllen grundsätzlich nicht die Bedingung $C_A$ ≦ 6% und S ≦ 2000 ppm und kommen deshalb erfindungsgemäß nicht in Betracht.

Vorzugsweise besitzen die erfindungsgemäß wirksamen Prozeßöle einen $C_A$-Wert von ≦ 5%, noch bevorzugter ≦ 3% und insbesondere ≦ 2%. Der Schwefelgehalt der erfindungsgemäß wirksamen Prozeßöle ist vorzugsweise ≦ 1000 ppm, noch bevorzugter ≦ 500 ppm und insbesondere ≦ 100 ppm. Der polare Anteil in den erfindungsgemäß wirksamen Prozeßölen ist vorzugsweise ≦ 0,7%, noch bevorzugter ≦ 0,5% und insbesondere ≦ 0,3.

Der Weichmachergehalt des erfindungsgemäßen Separators liegt im Rahmen des üblichen. Gewöhnlich beträgt die Weichmachermenge bezogen auf das Separatorgewicht 1 bis 40 Gew.%. Bevorzugte Weichmachergehalte sind 5 bis 25 Gew.% und insbesondere 10 bis 15 Gew.%. Neben den erfindungsgemäß verwendeten hochausraffinierten Prozeßölen können auch andere übliche Weichmacher verwendet werden (siehe unten).

Abgesehen von den in den Separatoren als Weichmacher enthaltenen Prozeßölen handelt es sich bei dem erfindungsgemäßen Akkumulator um einen üblichen Blei/Schwefelsäure-Akkumulator mit herkömmlichen Elektroden und Schwefelsäure als Elektrolyt.

Wie in dem bereits oben genannten Stand der Technik beschrieben, enthalten gefüllte Polyolefinseparatoren meistens Polyethylen, wobei im Rahmen der Erfindung ultrahochmolekulares Polyethylen (gewichtsdurchschnittliches Molekulargewicht von mindestens 1 000 000) bevorzugt ist. Geeignet sind aber auch Polypropylen, Polybuten, Polystyrol, Ethylen-Propylen-Copolymere, Ethylen-Hexylen-Copolymere, Ethylen-Buten-Copolymere, Propylen-Buten-Copolymere, Ethylen-Propylen-Buten-Copolymere und Copolymere aus Ethylen oder Propylen mit einer ethylenisch ungesättigten Monocarbonsäure, nämlich Acrylsäure, Metacrylsäure oder deren Gemische. Auch bezüglich der geeigneten Füllstoffe sei auf den eingangs genannten Stand der Technik verwiesen. Ein erfindungsgemäß bevorzugter Füllstoff ist $SiO_2$.

Außer den zuvor genannten Hauptbestandteilen können die Separatoren weitere übliche Bestandteile wie Ruß, Antioxidantien, Gleitmittel, andere Füllstoffe wie z.B. Talkum usw. und gegebenenfalls andere Polymere in mehr oder weniger untergeordneter Menge enthalten.

Die den Separator bildenden Materialien werden in üblicher Weise sorgfältig vermischt und anschließend unter Erwärmung zu einem bahnförmigen Material (meist Folie genannt) geformt. Aus diesem wird dann mit einem organischen Lösungsmittel der Weichmacher extrahiert, um die gewünschte Porosität zu erzielen. Schließlich wird das Separatormaterial zu blattförmigen Separatoren geschnitten. Die Oberflächen des Separators können glatt, gerippt oder auf andere Weise beliebig geformt sein.

Das erfindungsgemäß verwendete Prozeßöl kann in den Separator eingebracht werden, indem es der Ausgangsmischung zugesetzt und die Folie auf einen bestimmten Restölgehalt extrahiert wird. Eine andere Möglichkeit besteht darin, einen erfindungsgemäßen oder einen anderen Weichmacher in der Ausgangsmischung zu benutzen, diesen Weichmacher ganz oder unvollständig zu extrahieren und die freiliegenden Oberflächen des Batterieseparators mit der gewünschten Menge des erfindungsgemäß geeigneten Öls zu überziehen. Dazu kann der Separator z.B. in eine Öl-Lösungsmittel-Lösung eingetaucht und das Lösungsmittel entfernt werden oder das Öl allein oder mit Verdünnungsmittel auf den Separator aufgewalzt oder aufgesprüht werden.

Das Verfahren der völligen Extraktion und Wiederauffüllung durch Eintauchen in eine Öl-Lösungsmittel-Lösung wird im folgenden Reequilibrierung genannt.

Neben anderen Substanzen werden im Stand der Technik die verschiedensten Öle als Weichmacher verwendet bzw. vorgeschlagen. Jedoch wird auf den Aromatenanteil, den Schwefelgehalt und den polaren Anteil entweder überhaupt nicht eingegangen oder die vorgeschlagenen Öle erfüllen nicht die oben angegebenen Bedingungen. So werden in der DE-OS 30 04 659 aromatische Öle vorgeschlagen, während das in der US-PS 3 351 495 und DE-AS 1 496 123 genannte Shellflex 411 einen $C_A$-Wert von 8% und das in der US-PS 4 024 323 genannte Shellflex 412 einen polaren Anteil von 1,3% hat.

Auch im Zusammenhang mit der beim Einsatz von gefüllten Polyolefinseparatoren zu beobachtenden Bildung von gefärbten, meist dunklen und oftmals klebrigen Ablagerungen ist die Verwendung der erfindungsgemäß geeigneten Prozeßöle als Weichmacher noch nicht vorgeschlagen worden. Dies ist angesichts der Schwere des Problems der Bildung derartiger Ablagerungen, des sogenannten Black Scums oder Grey Scums, und der weit verbreiteten Verwendung von Prozeßölen als Weichmacher in Separatoren äußerst überraschend und zeigt, daß die Fachwelt offensichtlich den Aromatenanteil, den Schwefelgehalt und den polaren Anteil der als Weichmacher verwendeten Prozeßöle bei der Lösung des Black-Scum-Problems nicht in Betracht gezogen hat.

Im folgenden soll die Erfindung anhand von Beispielen erläutert werden. Zur Beurteilung der Brauchbarkeit von Prozeßölen als Weichmacher wurden Akkumulatortests durchgeführt. Die dabei zum Einsatz gekommenen Muster-Akkumulatoren bestanden aus Zellen mit jeweils 5 positiven und 4 negativen Platten, Sb-Gehalt 2,5 Gew.%, mit einer Gesamtkapazität von 36 Ah/Zelle. Wenn nicht anders angegeben, wurden die negativen Platten mit Separatortaschen aus gefülltem Polyethylen (Gesamtdicke 1,0 mm) separiert, die nach dem Verfahren gemäß US-PS 3 351 495 hergestellt worden waren. Der Elektrolyt war Schwefelsäure in einer Menge von 400 ml/Zelle.

Nach Durchführung der Tests wurden die Zellen geöffnet und die Menge der gefärbten Ablagerungen an Zellkästen, Zellendeckeln und Stopfen von mehreren Personen beurteilt, wobei im Wertungssystem 20 Punkte für die schwersten und 1 Punkt für die geringsten Ablagerungen vergeben wurden. Aus allen Beurteilungen wurde der Durchschnitt gebildet.

### Beispiel 1

Separatoren aus gefülltem Polyethylen wurden bis zur Gewichtskonstanz mit Hexan extrahiert und so völlig von Öl befreit. Sie wurden dann in oben angegebener Weise mit den in Tabelle 1 aufgeführten Ölen reequilibriert. Akkumulatoren gemäß obiger Beschreibung, die mit jeweils vier Separatortaschen separiert wurden, wurden einer jeweils gleichen elektrischen Prüfung unterzogen. Anschließend wurden sie geöffnet und wie oben beschrieben beurteilt. Die Ergebnisse sind ebenfalls in Tabelle 1 wiedergegeben.

### Beispiel 2

Handelsübliche, vermutlich nach der US-PS 4,024,323 hergestellte Separatoren (in Tabelle 2 als Handelsprodukt bezeichnet) wurden wie in Beispiel 1 mit den in Tabelle 2 angegebenen Ölen reequilibriert. Diese Separatoren wurden wie in Beispiel 1 einer elektrischen Prüfung zur Beurteilung der Menge an Ablagerungen unterzogen. Zum Vergleich wurden parallel sowohl mit Shellflex 411 (Öl 4) durch Extrusion und Extraktion auf den gewünschten Restölgehalt gefertigte Separatoren aus gefülltem Polyethylen (in Tabelle 2 als Original bezeichnet) als auch reequilibrierte Separatoren aus gefülltem Polyethylen dieser Prozedur unterzogen.

EP 0 425 784 B1

## Tabelle 1

| Öl | Öltyp | $C_A$ (%) | Schwefelgehalt (ppm) | Polarer Anteil (%) | Ölgehalt (%) des Separators | Schwere der Ablagerungen |
|---|---|---|---|---|---|---|
| (1) | aromatisch | 43 | 40 000 | > 4,0 | 12,3 | 17 |
| (2) | naphthenisch | 11 | 800 | 0,3 | 13,2 | 14 |
| (3) | paraffinisch | 8 | 8 000 | > 1,0 | 11,7 | 13 |
| (4) | rel. naphthenisch | 8 | 500 | 1,3 | 11,9 | 13 |
| (5) | rel. naphthenisch | 8 | < 500 | 0,3 | 11,2 | 13 |
| (6) | paraffinisch | 2 | 2 300 | 0,9 | 12,5 | 11 |
| (7) | paraffinisch | 4 | 4 000 | 1,0 | 11,9 | 10 |
| (8) | rel. naphthenisch | 4 | 1 000 | 1,3 | 12,3 | 10 |
| (9) | rel. naphthenisch | 5 | 400 | 0,2 | 12,0 | 4 |
| (10) | rel. naphthenisch | 5 | < 100 | 0,2 | 12,6 | 3 |
| (11) | paraffinisch | 3 | 1 000 | 0,1 | 11,8 | 3 |
| (12) | paraffinisch | 2 | 1 000 | 0,2 | 12,3 | 3 |

## Tabelle 2

| | Separator | Öl [1] | Art der Ölaufbringung | Schwere der Ablagerungen |
|---|---|---|---|---|
| (1) | Handelsprodukt | (4) | Reequilibrierung | 13 |
| (2) | Handelsprodukt | (10) | Reequilibrierung | 3 |
| (3) | gef. PE[2] | (4) | Reequilibrierung | 12 |
| (4) | gef. PE[2] | (10) | Reequilibrierung | 2 |
| (5) | gef. PE[2] | (4) | Original | 13 |

[1] Öldaten siehe Tabelle 1 unter der jeweils angegebenen Nummer

[2] gef. PE = gefülltes Polyethylen

EP 0 425 784 B1

**Patentansprüche**

1.  Blei/Schwefelsäure-Akkumulator mit mindestens einem Separator aus gefülltem Polyolefin, **dadurch gekennzeichnet**, daß der Separator als Weichmacher ein Prozeßöl mit einem $C_A$-Wert von $\leqq$ 6%, einem Schwefelgehalt von $\leqq$ 2000 ppm und einem polaren Anteil von $\leqq$ 1,0 % enthält.

2.  Akkumulator nach Anspruch 1, **dadurch gekennzeichnet**, daß der $C_A$-Wert des Prozeßöls $\leqq$ 5%, vorzugsweise $\leqq$ 3% und insbesondere $\leqq$ 2% ist.

3.  Akkumulator nach Anpruch 1 oder 2, **dadurch gekennzeichnet**, daß der Schwefelgehalt des Prozeßöls $\leqq$ 1000 ppm, vorzugsweise $\leqq$ 500 ppm und insbesondere $\leqq$ 100 ppm ist.

4.  Akkumulator nach einem der Ansprüche 1 bis 3, **dadurch gekennzeichnet**, daß der polare Anteil des Prozeßöls $\leqq$ 0,7%, vorzugsweise $\leqq$ 0,5% und insbesondere $\leqq$ 0,3% ist.

5.  Akkumulator nach einem der Ansprüche 1 bis 4, **dadurch gekennzeichnet**, daß das Prozeßöl ein naphthenisches und vorzugsweise ein relativ naphthenisches Öl ist.

6.  Akkumulator nach einem der Ansprüche 1 bis 4, **dadurch gekennzeichnet**, daß das Prozeßöl ein paraffinisches Öl ist und einen $C_A$-Wert von mehr als 0,1%, vorzugsweise mehr als 0,5% und insbesondere mehr als 1% besitzt.

7.  Akkumulator nach Anspruch 6, **dadurch gekennzeichnet**, daß der Schwefelgehalt des Prozeßöls größer als 100 ppm ist.

8.  Akkumulator nach einem der Ansprüche 1 bis 7, **dadurch gekennzeichnet**, daß der Separator 1 bis 40 Gew.%, vorzugsweise 5 bis 25 Gew.% und insbesondere 10 bis 15 Gew% Prozeßöl als Weichmacher enthält.

9.  Akkumulator nach einem der Ansprüche 1 bis 8, **dadurch gekennzeichnet**, das der Separator noch einen oder mehrere übliche Weichmacher enthält.

10. Akkumulator nach einem der Ansprüche 1 bis 9, **dadurch gekennzeichnet**, daß der Separator aus gefülltem Polyethylen, insbesondere ultrahochmolekularem Polyethylen besteht und im wesentlichen mit $SiO_2$ gefüllt ist.

11. Separator aus gefülltem Polyolefin für Blei/Schwefelsäure-Akkumulatoren, **dadurch gekennzeichnet**, daß er als Weichmacher ein Prozeßöl mit einem $C_A$-Wert von $\leqq$ 6%, einem Schwefelgehalt von $\leqq$ 2000 ppm und einem polaren Anteil von $\leqq$ 1,0% enthält.

12. Separator nach Anspruch 11, **dadurch gekennzeichnet**, daß das Prozeßöl einen $C_A$-Wert von $\leqq$ 5%, vorzugsweise $\leqq$ 3% und insbesondere $\leqq$ 2% besitzt.

13. Separator nach Anspruch 11 oder 12, **dadurch gekennzeichnet**, daß der Schwefelgehalt des Prozeßöls $\leqq$ 1000 ppm, vorzugsweise $\leqq$ 500 ppm und insbesondere $\leqq$ 100 ppm ist.

14. Separator nach einem der Ansprüche 11 bis 13, **dadurch gekennzeichnet,** daß der polare Anteil des Prozeßöls $\leqq$ 0,7%, vorzugsweise $\leqq$ 0,5% und insbesondere $\leqq$ 0,3 % ist.

15. Separator nach einem der Ansprüche 11 bis 14, **dadurch gekennzeichnet**, daß das Prozeßöl ein naphthenisches und vorzugsweise ein relativ naphthenisches Öl ist.

16. Separator nach einem der Ansprüche 11 bis 14, **dadurch gekennzeichnet**, daß das Prozeßöl ein paraffinisches Öl ist und einen $C_A$-Wert von mehr als 0,1%, vorzugsweise mehr als 0,5% und insbesondere mehr als 1% besitzt.

17. Separator nach Anspruch 16, **dadurch gekennzeichnet**, daß der Schwefelgehalt des Prozeßöls größer als 100 ppm ist.

18. Separator nach einem der Ansprüche 11 bis 17, **dadurch gekennzeichnet**, daß er 1 bis 40 Gew.%, vorzugsweise 5 bis 25 Gew.% und insbesondere 10 bis 15 Gew.% Weichmacher enthält.

19. Separator nach einem der Ansprüche 11 bis 18, **dadurch gekennzeichnet**, daß er zusätzlich einen oder mehrere übliche Weichmacher enthält.

20. Separator nach einem der Ansprüche 11 bis 19, **dadurch gekennzeichnet**, daß er aus gefülltem Polyethylen, insbesondere ultrahochmolekularem Polyethylen besteht und im wesentlichen mit $SiO_2$ und Weichmacher gefüllt ist.

21. Verfahren zur Verringerung der Bildung von gefärbten Ablagerungen in einem Blei/Schwefelsäure-Akkumulator mit mindestens einem Separator aus gefülltem Polyolefin, **dadurch gekennzeichnet**, daß man in dem Akkumulator Separatoren gemäß einem der Ansprüche 11 bis 20 verwendet.

## Claims

1. Lead/sulphuric acid accumulator having at least one separator of filled polyolefin, characterized in that the separator contains, as plasticizer, a process oil having a $C_A$ value of $\leqq$ 6 %, a sulphur content of $\leqq$ 2000 ppm and a polar content of $\leqq$ 1.0 %.

2. Accumulator according to Claim 1, characterized in that the $C_A$ value of the process oil is $\leqq$ 5 %, preferably $\leqq$ 3 % and in particular $\leqq$ 2 %.

3. Accumulator according to Claim 1 or 2, characterized in that the sulphur content of the process oil is $\leqq$ 1000 ppm, preferably $\leqq$ 500 ppm in particular $\leqq$ 100 ppm.

4. Accumulator according to one of Claims 1 to 3, characterized in that the polar content of the process oil is $\leqq$ 0.7 %, preferably $\leqq$ 0.5 % and in particular $\leqq$ 0.3 %.

5. Accumulator according to one of Claims 1 to 4, characterized in that the process oil is a naphthenic oil, preferably a relatively naphthenic oil.

6. Accumulator according to one of Claims 1 to 4, characterized in that the process oil is a paraffinic oil and has a $C_A$ value of greater than 0.1 %, preferably greater than 0.5 % and in particular greater than 1 %.

7. Accumulator according to Claim 6, characterized in that the sulphur content of the process oil is greater than 100 ppm.

8. Accumulator according to one of Claims 1 to 7, characterized in that the separator contains from 1 to 40 % by weight, preferably from 5 to 25 % by weight and in particular from 10 to 15 % by weight, of process oil as plasticizer.

9. Accumulator according to one of Claims 1 to 8, characterized in that the separator also contains one or more conventional plasticizers.

10. Accumulator according to one of Claims 1 to 9, characterized in that the separator comprises filled polyethylene, in particular ultra high-molecular-weight polyethylene, and is essentially filled with $SiO_2$.

11. Separator comprising filled polyolefin for lead/sulphuric acid accumulators, characterized in that it contains, as plasticizer, a process oil having a $C_A$ value of $\leqq$ 6 %, a sulphur content of $\leqq$ 2000 ppm and a polar content of $\leqq$ 1.0 %,

12. Separator according to Claim 11, characterized in that the $C_A$ value of the process oil is $\leqq$ 5 %, preferably $\leqq$ 3 % and in particular $\leqq$ 2 %.

13. Separator according to Claim 11 or 12, characterized in that the sulphur content of the process oil is $\leqq$ 1000 ppm, preferably $\leqq$ 500 ppm in particular $\leqq$ 100 ppm.

14. Separator according to one of Claims 11 to 13, characterized in that the polar content of the process oil

is $\leqq$ 0.7 %, preferably $\leqq$ 0.5 % and in particular $\leqq$ 0.3 %.

15. Separator according to one of Claims 11 to 14, characterized in that the process oil is a naphthenic oil, preferably a relatively naphthenic oil.

16. Separator according to one of Claims 11 to 14, characterized in that the process oil is a paraffinic oil and has a $C_A$ value of greater than 0.1 %, preferably greater than 0.5 % and in particular greater than 1 %.

17. Separator according to Claim 16, characterized in that the sulphur content of the process oil is greater than 100 ppm.

18. Separator according to one of Claims 11 to 17, characterized in that it contains from 1 to 40 % by weight, preferably from 5 to 25 % by weight and in particular from 10 to 15 % by weight, of plasticizer.

19. Separator according to one of Claims 11 to 18, characterized in that it also contains one or more conventional plasticizers.

20. Separator according to one of Claims 11 to 19, characterized in that it comprises filled polyethylene, in particular ultra high-molecular-weight polyethylene, and is essentially filled with $SiO_2$ and plasticizers.

21. Method for reducing the formation of coloured deposits in a lead/sulphuric acid accumulator containing at least one separator of filled polyolefin, characterized in that separators according to one of Claims 11 to 20 are used in the accumulator.

## Revendications

1. Accumulateur au plomb/acide sulfurique avec au moins un séparateur en polyoléfine chargée , caractérisé en ce que le séparateur contient, en tant que plastifiant, une huile de traitement avec une valeur de $C_A$ de $\leqq$ 6%, une teneur en soufre de 2000 ppm et une proportion polaire de $\leqq$ 0,1%.

2. Accumulateur selon la revendication 1, caractérisé en ce que la valeur de $C_A$ de l'huile de traitement est $\leqq$ 5%, avantageusement $\leqq$ 3% et, en particulier , $\leqq$ 2%.

3. Accumulateur selon la revendication 1 ou 2, caractérisé en ce que la teneur en soufre de l'huile de traitement est $\leqq$ 1000 ppm, avantageusement $\leqq$ 500 ppm et, en particulier, $\leqq$ 100 ppm.

4. Accumulateur selon l'une quelconque des revendications 1 à 3, caractérisé en ce que la proportion polaire de l'huile de traitement est $\leqq$ 0,7%, avantageusement $\leqq$ 0,5% et, en particulier, $\leqq$ 0,3%.

5. Accumulateur selon l'une quelconque des revendications 1 à 4, caractérisé en ce que l'huile de traitement est une huile naphténique et, avantageusement, une huile relativement naphténique.

6. Accumulateur selon l'une quelconque des revendications 1 à 4, caractérisé en ce que l'huile de traitement est une huile paraffinique et a une valeur de $C_A$ de plus de 0,1%, avantageusement de plus de 0,5% et, en particulier, de plus de 1%.

7. Accumulateur selon la revendication 6, caractérisé en ce que la teneur en soufre de l'huile de traitement est plus importante que 100 ppm.

8. Accumulateur selon l'une quelconque des revendications 1 à 7, caractérisé en ce que le séparateur contient 1 à 40% en poids, avantageusement 5 à 25% en poids et, en particulier, 10 à 15% en poids d'huile de traitement en tant que plastifiant.

9. Accumulateur selon l'une quelconque des revendications 1 à 8, caractérisé en ce que le séparateur contient un ou plusieurs autres plastifiants additionnels.

10. Accumulateur selon l'une quelconque des revendications 1 à 9, caractérisé en ce que le séparateur se compose de polyéthylène chargé, en particulier de polyéthylène de poids moléculaire ultra-élevé et est chargé essentiellement de $SiO_2$.

11. Séparateur en polyoléfine chargée pour un accumulateur au plomb/acide sulfurique, caractérisé en ce qu'il contient, en tant que plastifiant, une huile de traitement avec une valeur de $C_A$ de $\leqq$ 6%, une teneur en soufre de $\leqq$ 2000 ppm et une proportion polaire de $\leqq$ 1,0%.

12. Séparateur selon la revendication 11, caractérisé en ce que l'huile de traitement a une valeur de $C_A$ de $\leqq$ 5%, avantageusement $\leqq$ 3% et, en particulier $\leqq$ 2%.

13. Séparateur selon la revendication 11 ou 12, caractérisé en ce que la teneur en soufre de l'huile de traitement est $\leqq$ 1000 ppm, avantageusement $\leqq$ 500 ppm et, en particulier $\leqq$ 100 ppm.

14. Séparateur selon l'une quelconque des revendications 11 à 13, caractérisé en ce que la proportion polaire de l'huile de traitement est $\leqq$ 0,7%, avantageusement $\leqq$ 0,5% et, en particulier $\leqq$ 0,3%.

15. Séparateur selon l'une quelconque des revendications 11 à 14, caractérisé en ce que l'huile de traitement est une huile naphténique et, avantageusement, une huile relativement naphténique.

16. Séparateur selon l'une quelconque des revendications 11 à 14, caractérisé en ce que l'huile de traitement est une huile paraffinique et a une valeur de $C_4$ de plus de 0,1%, avantageusement de plus de 0,5% et, en particulier de plus de 1%.

17. Séparateur selon la revendication 16, caractérisé en ce que la teneur en soufre de l'huile de traitement est plus importante que 100 ppm.

18. Séparateur selon l'une quelconque des revendications 11 à 17, caractérisé en ce qu'il contient 1 à 40% en poids, avantageusement 5 à 25% en poids et, en particulier, 10 à 15% en poids d'un plastifiant.

19. Séparateur selon l'une quelconque des revendications 11 à 18, caractérisé en ce qu'il contient de plus un ou plusieurs plastifiants traditionnels.

20. Séparateur selon l'une quelconque des revendications 1 à 19, caractérisé en ce qu'il se compose de polyéthylène chargé, en particulier de polyéthylène de poids moléculaire ultra-élevé et en ce qu'il est chargé essentiellement de $SiO_2$ et du plastifiant.

21. Procédé pour diminuer la formation de dépôts colorés dans un accumulateur au plomb/acide sulfurique avec au moins un séparateur en polyoléfine chargée , caractérisé en ce qu'on utilise dans l'accumulateur des séparateurs selon l'une quelconque des revendications 11 à 20.